Europäisches Patentamt

European Patent Office

Office européen des brevets

(11) Publication number: **0 348 855**
**A2**

## EUROPEAN PATENT APPLICATION

(21) Application number: **89111553.7**

(51) Int. Cl.⁴: **G02B 27/00**

(22) Date of filing: **24.06.89**

(30) Priority: **27.06.88 US 211603**

(43) Date of publication of application:
**03.01.90 Bulletin 90/01**

(84) Designated Contracting States:
**DE FR GB NL**

(71) Applicant: **HONEYWELL INC.**
**Honeywell Plaza**
**Minneapolis Minnesota 55408(US)**

(72) Inventor: **Mueller, Peter F.**
**7 Preservation Way**
**Westform Massachusetts 01886(US)**
Inventor: **Reynolds, George O.**

**deceased(US)**

(74) Representative: **Rentzsch, Heinz et al**
**Honeywell Europe S.A. Holding KG Patent &**
**License Dept. Postfach 10 08 65**
**Kaiserleistrasse 39**
**D-6050 Offenbach am Main(DE)**

(54) **System for removing phase aberrations in a window.**

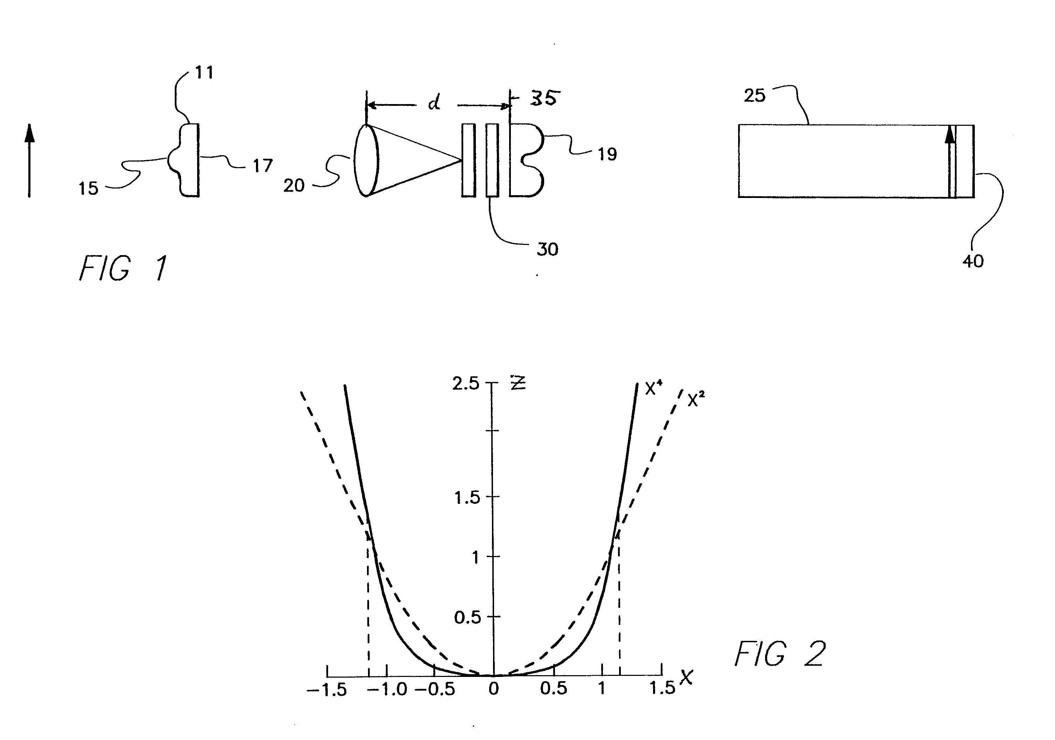

(57) A system for removing phase aberrations in a
thick window including a demagnified pupil con-
jugate to the window comprises means (19) for pro-
viding phase conjugation correction; means (20) for
demagnification; means (30) for limiting the aperture
of the phase conjugation apparatus; and image sens-
ing means (25). The apparatus for demagnification
relates to the conjugate elements by the equation
$M_{LONG} = (M_{LAT})^2$. The limiting apparatus (30) limits
the aperture of a phase conjugation apparatus (19)
such that the curvature in depth approximates a
correction which is a function of the square of the
lateral magnification (Fig. 1).

FIG 1

## System for removing Phase Aberrations in a Window

The present invention relates generally to a method and apparatus for removing aberrations in optical surfaces and more particularly to a method and apparatus for removing complex phase aberrations in windows or other optical surfaces using broadband phase conjugation technology including a demagnified pupil conjugate to the window.

The aerodynamic performance requirements for aircraft, missiles, or other sensor platforms often necessitate the use of windows that have curved surfaces which are not symmetrical. In addition, these windows often exhibit localized manufacturing errors, such as thickness and curvature variations, as well as prismatic or wedge effects. These imperfections and asymmetries result in complex distortions of a scene when it is viewed through such windows. Some of the distortions may be characterized as follows: 1) localized or global shape distortions, 2) variable or localized magnification caused by the variations in optical power of the window, 3) one-dimensional magnifications and shifts caused by unequal curvatures of the window in different directions, and 4) other distortions caused by geometrical and/or surface defects on the outside surface of the window, the inside surface of the window, or both the outside and inside surfaces of the window.

Sometimes the distortion caused by the irregularities is so severe that no recognizable image can be obtained. Therefore, errors of this magnitude may be devastating to the performance of an imaging sensor placed behind the window. Similarly, these errors may significantly effect the judgement of a pilot viewing a scene through the window or sensor image because of binocular deviations or disparity. Because of these distortions, the design of windows on high speed platforms used in conjunction with imaging sensors has, unfortunately, often been controlled primarily by the sensor imaging requirements, rather than by the aerodynamic requirements. In other instances, the problem of image distortion caused by window aberrations has been avoided by simply eliminating the window element itself and viewing the scene to be observed through a hole in the aircraft. Both of these solutions compromise the performance of the vehicle.

The process of phase conjugation, which results from multiplying a complex wavefront by its complex conjugate is a well-known technique for correcting wavefront distortion. For example, the technique is commonly used to design aspheric corrector plates or aspheric elements for optical imaging systems. Although the plates are refractive, they generally correct only the aspheric portions of the wavefront for rotationally symmetrical aberrations, unlike the aberrations of the typical window in an airborne vehicle in which the entire asymmetric wavefront must be corrected.

Phase conjugation techniques using conjugate refractive (or reflective) type elements have been used in a variety of other circumstances to correct wavefront distortion. For example, in non-linear optics, a non-linear medium is used in conjunction with four-wave laser mixing to create real-time phase conjugated (corrected) wavefronts. Conjugate wavefronts have also been used to dynamically remove the effects of atmospheric turbulence from telescopes and other optical systems. In this type of application, referred to as "adaptive optics," interferometric measurements and appropriate servo loops are used to drive flexible optical elements to dynamically realize phase conjugations, and thus wavefront correction.

As far as is known, however, broadband phase conjugation including a demagnified pupil conjugate to the window has not been used to correct complex phase aberrations in aerodynamic windows or other types of "thick" surfaces (i.e., surfaces more than about a few millimeters thick).

One skilled in the art will appreciate that even in a one-to-one phase conjugate system, when the depth of focus is exceeded, the curvature of the conjugator must account for the magnification change to reduce the residual aberration in the image and increase the field of view of the conjugated image system. One skilled in the art will appreciate that while optics, such as cylinders, which vary as $X^2$ are fairly easy to manufacture, optics which are a function of $X^4$ would have a much higher cost and be very difficult to manufacture. The instant invention uses the fact that, for small angles (shown by the dotted lines in FIGURE 2), the two phase fronts $X^4$ and $X^2$ are reasonably equivalent. Therefore, the use of expensive optics is avoided.

Phase conjugation using diffraction rather than refraction or reflection is also known in the art. An example of this is holography. In a paper by G. O. Reynolds, J. L. Zuckerman, W. A. Dyes, and D. Miller entitled "Holographic Phase Compensation Techniques Applied to Human Cataracts," appearing in Opt. Eng. Vol. 12 No. 1, February, 1973, it is disclosed that laser holography can be used to see through excised human cataracts. As set forth in that paper, an extracted cataract from a human eye (representing an asymmetrically distorted optical element) was mounted in a Mach-Zehnder interferometer illuminated by a laser. A hologram was constructed of the cataract at the image plane of the interferometer by well-known holographic techniques. The hologram was then placed in the same position as recorded, and the reference beam of the interferometer was blocked such that light from the laser source was transmitted through both the cataract and the corrector hologram (its conjugate element). A target placed beyond the aberrated lens (the cataract) could then be read, thus demonstrating that holographic phase conjugation techniques can be used to view a target through a badly aberrated lens using coherent light.

As can be appreciated, the laser holographic approach used in conjunction with an extracted cataract as described above, is not satisfactory for solving the aberration problems posed by a complex window. First, this technique uses a laser and as such works only for one wavelength of light (that of the coherent illumination source). It cannot be used in broadband sensor applications because the diffraction effect of the hologram varies as a function of wavelength. Second, coherent illumination of the hologram is required to obtain the conjugate of the window from the hologram. thus, the scene desired to be viewed would also have to be laser illuminated, which would also defeat the purpose of correcting for a broadband sensor application.

A talk pertaining to broadband phase conjugation using thin flat plate aberrators and entitled Phase Conjugation With Incoherent Radiation was presented by G. O. Reynolds, D. A. Servaes, and J. B. DeVelis on October 19, 1982, at the 1982 Annual Meeting of the Optical Society of America and is summarized on page 1746 of the Journal of Optical Society of America, December, 1982, Volume 72.

A talk entitled, "Phase Conjugation with Particially Coherent Radiation," was presented by D. A. Servaes, J. B. DeVelis and G. 0. Reynolds, at the Optical Computing Conference. M.I.T. Boston, MA, on April 7, 1983. In both of the above talks it was shown that a thin, flat glass plate randomly scratched on one side could be passively phase conjugated for use with white light (i.e. broadband radiation) by placing a nearly index matched plastic replica of that plate in the image plane of the plate formed by an imaging lens, thereby creating a substantially undistorted image of a target when viewed through the lens by another imaging system.

In both of the above instances, the conjugate replica was made by placing the random glass surface against a sheet of optical quality plastic and then transferring the aberrations to the sheet of plastic by applying heat and pressure with a thermal laminating press.

It is accordingly an object of this invention to provide a new and improved method and apparatus for correcting phase aberrations in an optical surface using phase conjugation including a demagnified pupil conjugate to the optical surface.

It is another object of this invention to provide a method and apparatus for correcting phase aberrations in a thick non-planar, optical element such as an optical window in an aerodynamic vehicle, in order to further improve the image quality of a sensor system or viewer position behind a window without the need for a one-to-one imaging lens to image the window onto the conjugate element. These objects are achieved by the invention as described in claim 1. Other features, objects, and advantages of the invention are characterized in the dependent claims and will become apparent from the drawing and the following detailed description of the invention.

The system for removing phase aberrations in a thick window according to the invention includes a demagnified pupil conjugate to the window. The system comprises means for providing phase conjugation correction, means for demagnification, means for limiting the aperture of the phase conjugation means, and means for sensing the corrected image. The demagnification means operates such that the window and conjugate elements are related by the equation $M_{LONG} = (M_{LAT})^2$. Where $M_{LONG}$ is the longitudinal magnification and $M_{LAT}$ is the lateral or transverse magnification in the optical system. The limiting means operates such that the curvature in depth approximates a correction factor, x, which is a function of $(M_{LAT})^2$.

BRIEF DESCRIPTION OF THE DRAWINGS

For a more complete understanding of the invention, reference is hereby made to the drawing in which:

FIGURE 1 shows a window such as is typically mounted in the frame of an aircraft along with reduction optics and a demagnifying conjugator for correcting phase aberrations in the window. Also shown is a sensor disposed inside the aircraft for imaging a scene outside the aircraft through the window.

FIGURE 2 shows the small phase equivalence of quadratic and fourth power elements used in correcting phase aberrations in a cylindrical window with a cylindrical phase conjugate corrector element.

DESCRIPTION OF THE PREFERRED EMBODIMENT

For illustrative purposes, the invention will hereinafter be described with reference to correcting complex phase aberrations produced by irregularities on the outside surface of a cylindrical window. It should be understood, however, that the invention is not limited to correcting phase aberrations caused by irregularities on only the outside surface of a window, but rather is also applicable to correcting phase aberrations caused by irregularities on the inside surface of a window or, for that matter, on both surfaces of a window. It should also be understood that the invention is not limited to correcting phase aberrations caused by irregularities on only cylindrical windows, but rather is useful in correcting phase aberrations caused by irregularities in other types of optical elements or surfaces and especially, but not exclusively limited to thick surfaces.

Referring now to the drawings, there is shown in FIGURE 1 a cylindrical window 11. Window 11 has a thickness of more than a few millimeters. Window 11 includes a cylindrical outside surface which produces complex phase aberrations which are to be corrected according to this invention and an inside surface 17 which is flat and will be considered as having no geometrical and/or surface defects. Window 11 is made of optical quality material. The phase aberrations in surface 15 are corrected using reduction optics 20 and a demagnified conjugator or conjugate element 19. Conjugate element 19 is advantageously made of an optical quality material such as glass, plastic, or IR material which has about the same index of refraction as window 11 and is made by well known technologies such as molding or machining. The reduction optics 20 advantageously comprises a demagnifying lens having a lateral magnification factor equal to the square root of the focal length ratio between the window 11 and the conjugator 19. In general, the lateral (transverse) and longitudinal magnifications in an optical system are related by the formula: $M_{LONG} = (M_{LAT})^2$. In broadband phase conjugation, wavefronts are matched in depth so that the focal length ratio between the window 11 and the conjugate element 19 must be related by the formula: $(M_{LAT})^2$ = focal length ratio.

Also shown in FIGURE 1 is a sensor 25, such as an ultraviolet, visible, or infrared camera which is positioned for recording a scene through window 11. In addition, a stop 30 is placed over the conjugator 19 to achieve a high degree of image quality. In the system, as shown in FIGURE 1, the conjugator element 19 is positioned for use as shown in FIGURE 1 in plane 35 a distance, d, about equal to the square root of $M_{LAT}$.

In one experiment performed by the Electro-Optics Division of Honeywell Inc. in Wilmington, Massachusetts, a cylindrical window having a focal length of $F_W$ = 38.1mm was selected. A conjugate negative cylinder of focal length $F_c$ = 6.35mm was selected to function as the conjugate element. In broadband phase conjugation, wavefronts are matched in depth so that the focal length ratio of 6 between the window and the conjugate element are related by: $(M_{LAT})^2$ = 6, or $M_{LAT}$ = $\sqrt{6}$. Thus, the lateral magnification of the optical imaging system must be equal to $\sqrt{6}$ in order to conjugate the cylindrical window with the negative cylindrical lens of one-sixth the focal length.

In addition, a phase stop 30 was placed over the conjugator to achieve acceptable image quality. As the stop was opened, the image quality deteriorated because of the residual aberration. Tight tolerance on aberration is caused by the longitudinal magnification of the system. In the vicinity of the focal plane 40, one skilled in the art will appreciate that the depth in correction needed to conjugate the cylindrical window is a function of $X^4$ where X is a correction factor. That is, since the window is cylindrical in shape, the optical surface curvature varies as $X^2$. Therefore, the in depth correction needed to conjugate the cylinder should be $(X^2)^2$ = $X^4$.

Referring now to FIGURE 2, the small phase equivalence of quadradic and fourth power elements used in correcting a cylindrical window with a cylindrical phase conjugate corrector are shown. The Z axis shown is a relative amplitude scale, and the X axis is a relative phase scale. For small angles as shown by the dotted lines, the two phase fronts $X^4$ and $X^2$ are reasonably equivalent. This approximate equivalence explains the acceptable results obtained with the stop used in the experiment described above. To obtain broader aperture conjugators, the curvature in depth must vary with the square of the lateral magnification. Therefore, if the lateral magnification varies as $X^2$ as in the case of a cylindrical window, the curvature in depth must vary as $X^4$.

## Claims

1. A system for removing phase aberrations in a thick window (11) including a demagnified pupil conjugate to the window, **characterized by:**

a) means (19) for providing phase conjugation correction;

b) means (20) for demagnification such that the window (11) and conjugate elements (19) are related by the equation $M_{LONG} = (M_{LAT})^2$;

c) means (30) for limiting the aperture of the phase conjugation means (19) such that the curvature in depth approximates a correction factor which is a function of $(M_{LAT})^2$; and

d) means (25) for sensing the corrected image.

2. The system of claim 1, **characterized in that** the window (11) is a cylindrical window.

3. The system of claim 2, **characterized in that** the means (19) for providing phase conjugation correction is a conjugate element of the cylindrical window (11).

4. The system of claim 1 or 3, **characterized in that** the aperture limiting means is a stop (30) placed over the conjugate element (19) and sensing means (25) such that the resultant curvature in depth is a quadratic correction factor, $X^2$, which nearly approximates a fourth power correction factor $X^4$.

5. The system according to one of the preceding claims, **characterized in that** the sensing means is a camera.

6. The system according to one of the preceding claims, **characterized in that** the cylindrical window (11) is on an aircraft.

FIG 1

FIG 2

EP 0 348 855 A2